# EUROPEAN PATENT APPLICATION

(11) **EP 4 102 149 A1**
(43) Date of publication of application: **14.12.2022**
(21) Application number: 21382506.0
(22) Date of filing: 07.06.2021
(51) Int. Cl.: F24F 12/00, F24F 13/08, F24F 13/20, F24F 13/02

(54) **AIRFLOW INVERTER DEVICE**

(71) Applicant: Soler & Palau Research, S.L., 08150 Parets del Vallés (Barcelona) (ES)
(72) Inventor: BACH-ESTEVE BURCH, Albert, 08150 Parets del Vallès (Barcelona) (ES); FAIG DURAN, Juli, 08150 Parets del Vallès (Barcelona) (ES); TRUJILLO GUASCH, Raúl, 08150 Parets del Vallès (Barcelona) (ES)
(74) Representative: Plasseraud IP

(57) **Abstract**

The invention relates to an airflow inverter device for the mounting and installation of heat recuperators (1) arranged in facing connection positions with respect to common downward ducts (2) and (3) for air extraction and impulsion. The device is characterised in that it comprises a prismatic body (6), which has ducts (7) longitudinally defined therein which cross one another without communication between the same, the ends of said ducts (7) flowing into mouths (8) and (9) which are in transversely inverted positions at the ends of the aforementioned prismatic body (1).

## Description

### Technical field

The present invention is related to the installation of home heat recuperators that are arranged between a false ceiling and the resistant structure of the ceiling in the construction, and proposes an airflow inverter device that facilitates the mounting of said heat recuperators in the areas of application.

### State of the art

In blocks of flats it is common that, due to the different heights of the flats, there are flats in front of each other which share downward ducts in the building for air extraction and impulsion in ventilation systems and, therefore, it is common to have heat recuperators to reduce the energy consumption of the ventilation systems and, furthermore, it is common for these heat recuperators to be located in the space between there resistant structure (slab) of ceilings and the false ceilings such that the heat recuperators for ventilation systems of facing flats are, in turn, placed in front of each other in relation to the downward ducts for air extraction and impulsion.

Now, given that heat recuperators cannot be turned around, since they have a drain pipe that has to be located in the lower part thereof in order to carry out the function of the same, the air inlet and outlet mouths of the facing heat recuperators are in opposite facing situations with respect to the downward ducts for air extraction and impulsion in the building, such that the mouths of one of the facing heat recuperators can be directly connected, by means of respective tubes, to said downward ducts for air extraction and impulsion in the building, while the connection of the mouths of the opposite heat recuperator, with respect to the aforementioned downward ducts, has to be done by means of crossing tubes, one passing over the other.

This circumstance leads to a problem that makes the installation difficult, since the separation between the resistant structure of the ceilings and false ceilings usually coincides approximately with the height dimension of the heat recuperators, the diameter of the tubes for connecting the downward ducts for air extraction and impulsion in the building being similar, such that there is no space for a connection tube to pass over the other, and as such the tubes must be flattened, in situ, by the installer, or solutions must be implemented which provide for a longer path for the connection tubes to pass behind the heat recuperator in installations of application. Both solutions involve a large pressure drop, which leads to a significant reduction of the airflow conveyed by the heat recuperator.

### Object of the invention

According to the present invention, an airflow inverter device is proposed, which advantageously facilitates the installation of heat recuperators, eliminating the problems said installations have with conventional solutions.

This device object of the invention comprises a prismatic body, inside which two ducts are longitudinally defined which flow into respective mouths that are open at the ends of said prismatic body, the aforementioned ducts extending such that they cross each other, without inner communication between them, such that the end mouths of the ducts are at one end of the prismatic body in transversely inverted positions with respect to those of the other end. It is conceived that said ducts are thermally insulated with respect to one another, such that there is no heat transfer between the respective airflows.

Thus, a device is obtained that can be directly connected in relation to a heat recuperator in order to establish a connection from said device to the downward ducts for air extraction and impulsion in a building situated in transversely inverted positions, by means of tubes that do not have to cross one another in order for the inlet and outlet airflows in the heat recuperator to coincide in the corresponding positions with respect to the downward ducts for air extraction and impulsion in the building.

Thus, with the inverter device object of the invention, a significant advantage is achieved for the mounting and installation of heat recuperators that are arranged in facing connection positions with respect to common downward ducts for air extraction and impulsion in buildings to which they are applied, given that in said mounting it is not necessary for connection tubes to cross and be adapted so that they fit in the space available for the mounting, given that the inversion of the inlet and outlet airflows is done in the inverter device, the height dimension of which is similar to that of the heat recuperators to which it is applied.

Particularly, the inner ducts of the prismatic body of the airflow inverter device are envisaged in the crossing area which is narrow in height and widened on the horizontal plane, which allows said ducts to be able to cross without being in communication, within the height dimension of the prismatic body; further envisaged is that the area of the transversal cross section of the crossing ducts is kept constant throughout the entire length of the ducts, thereby avoiding a variation in the speed of the airflow when circulating through the inverter device, thus maintaining the operational features of the associated heat recuperator.

Preferably, the inverter device object of the invention can incorporate sealing covers that are arranged on the ends of the prismatic body that have openings which, in the mounting of the covers, coincide in front of the end mouths of the inner ducts of the prismatic body. This facilitates the adaptation of the device for connecting to the openings of the connection tubes of different configurations, providing covers with a corresponding configuration.

Therefore, the airflow inverter device, object of the invention, has highly advantageous features for the mounting and installation of heat recuperators for which it is intended, acquiring a life of its own and preferential character with respect to conventional solutions that are not currently used for this function.

### Description of the figures

Figure 1 shows a schematic perspective view of the arrangement of the two heat recuperators situated in facing positions to connect to common downward ducts for air extraction and impulsion in an assembly of application. The arrows in the figure indicate the direction of the airflow.
Figure 2 is a cross-sectional side view of an assembly of application, according to the arrangement of the preceding figure in accordance with the state of the art, in which the mouths of the heat recuperator situated on the left in the figure are connected directly to the downward ducts for air extraction and impulsion in the building by means of respective tubes, while the connection of the mouths of the opposite heat recuperator, with respect to the aforementioned downward ducts, must be done by means of crossing tubes, one passing over the other.
Figure 3 shows an exploded perspective view of an airflow inverter device according to the invention, the crossing inner ducts of the prismatic body being shown by dashed lines.

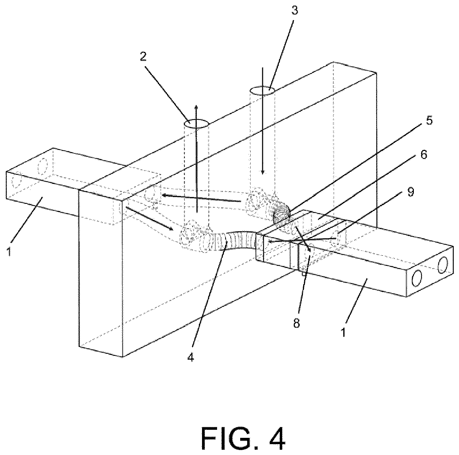

Figure 4 is a schematic perspective view of the arrangement of the assembly of two heat recuperators situated in facing positions, incorporating the airflow inverter device object of the invention in relation to one of the heat recuperators. The arrows in the figure indicate the direction of the airflow.
Figure 5 is a cross-sectional side view of the assembly of the preceding figure.
Figure 6 is an exploded perspective view of an exemplary embodiment of the airflow inverter device object of the invention with the end covers formed by two independent complementary halves.

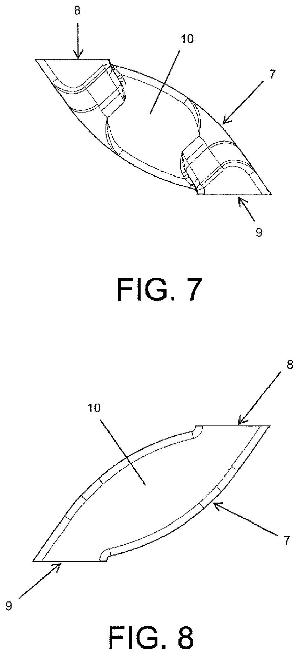

Figure 7 is a perspective view of the configuration of one of the inner ducts of the prismatic body of the airflow inverter device object of the invention.
Figure 8 is a longitudinal cross-sectional view of one of the inner ducts of the prismatic body of the airflow inverter device.
Figure 9 is a perspective view of the crossing of the inner ducts of the prismatic body of the airflow inverter device object of the invention.

### Detailed description of the invention

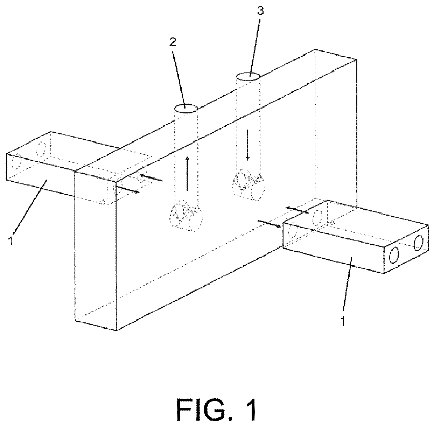

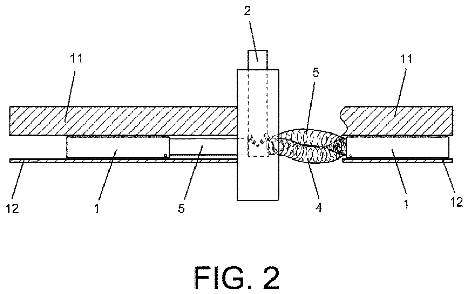

The object of the invention relates to an airflow inverter device for the mounting and installation of heat recuperators (1) in facing connection positions with respect to common downward ducts (2) and (3) for air extraction and impulsion, as seen in Figure 1, without having to have crossing connection tubes (4) and (5), as in the conventional arrangement of Figure 2, thereby avoiding the drawbacks of said conventional arrangement.

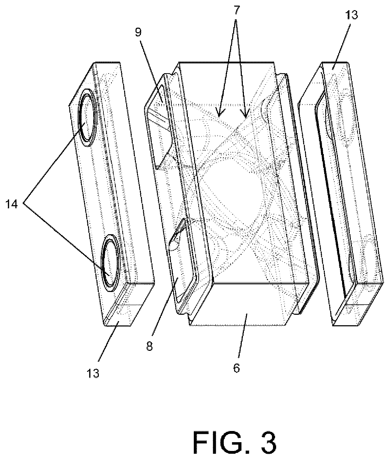

The airflow inverter device herein disclosed comprises a prismatic body (6), the height dimension of which, according to the arrangement of the assembly, corresponds to that of the heat recuperator (1) for which the application is intended, said prismatic body (6) having two ducts (7) longitudinally defined through the inside thereof, which cross one another without inner communication between the same, flowing into the ends of the prismatic body (6) with respective mouths (8) and (9), which are in transversely inverted positions at one end and at the other, as seen in Figure 3.

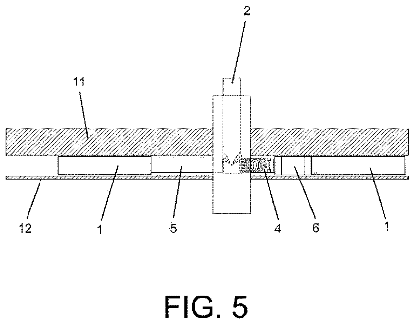

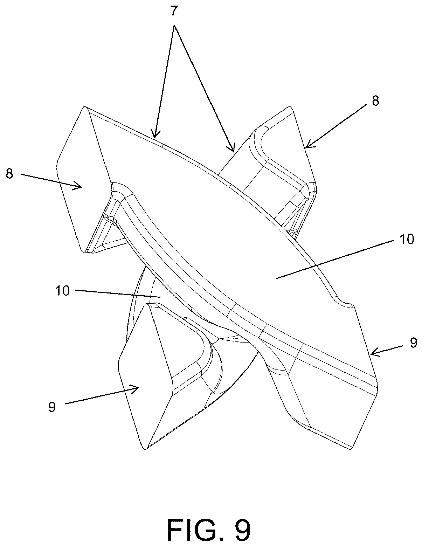

The aforementioned ducts (7) defined in the prismatic body (6) are configured in such a way that in the crossing area they have a section (10) that is narrow in height and widened on the horizontal plane, which allows said ducts (7) to cross without communicating, as shown in Figure 9, without the height of the crossing exceeding the height of the prismatic body (6), thereby allowing for the mounting of the installation in spaces with limited height, such as the resistant structure (11) of a ceiling and a corresponding decorative false ceiling (12), as can be seen in Figure 5, wherein the connection between the airflow inverter device and the downward ducts (2) and (3) for air extraction and impulsion to which they have to connect can be done by means of direct connection tubes (4) and (5), which do not have to cross so that the inlet and outlet airflows coincide in the heat recuperator of application, in relation to the downward ducts (2) and (3) with respect to the ones that have to establish the connection.

The prismatic body (6) is envisaged as a body formed into a single piece, moulded for example, the ducts (7) being defined by means of moulds adapted to the shapes of said ducts (7), which are thereby obtained with smooth transitions in their shapes, minimising the pressure drop that airflows may suffer when circulating through the inverter device in the operation of the application thereof, while the prismatic body (6) being formed as a single piece prevents air leaks from occurring.

The prismatic body (6) is preferably formed as a single piece, in particular a moulded piece, made of a thermally insulated material, such as expanded polypropylene (EPP) or expanded polystyrene (EPS). This way the ducts (7) are thermally insulated from one another by means of said thermally insulated material, preventing heat transfer between the respective airflows.

At the ends of the prismatic body (6) sealing covers (13) are arranged, which have openings (14) that coincide in front of the mouths (8) and (9) of the ducts (7) in the mounting arrangement of said covers (3) on the prismatic body (6), these openings (14) being envisaged to connect the connection tubes (4) and (5) to the same in order to communicate the airflow inverter device with the downward ducts (2) and (3) for air extraction and impulsion in the assembly of application.

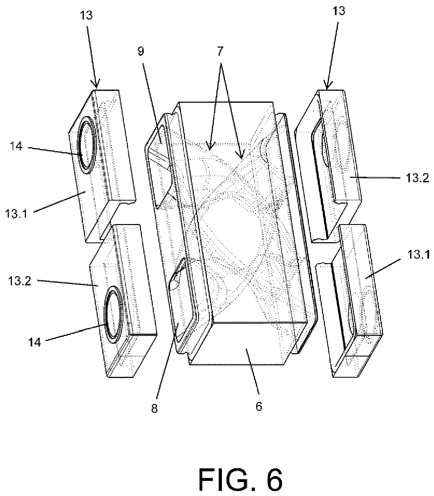

Each one of the covers (13) envisaged for that function can also be formed as a single piece, in which the openings (14) are defined as in the example of Figure 3 or, rather, each cover (13) can be made up of two independent halves (13.1) and (13.2), each one of them with an opening (14), such as the example of Figure 6, which does not alter the concept of the airflow inverter device for the function thereof, according to the invention.

## Claims

1. An airflow inverter device for the mounting and installation of heat recuperators (1) arranged in facing connection positions with respect to common downward ducts (2) and (3) for air extraction and impulsion, **characterised in that** it comprises a prismatic body (6), which has ducts (7) longitudinally defined therein which cross one another without communication between the same, the ends of said ducts (7) flowing into mouths (8) and (9) which are in transversely inverted positions at the ends of the aforementioned prismatic body (1).

2. The airflow inverter device, according to claim 1, **characterised in that** in the crossing area the ducts (7) have a section (10) that is narrow in height and widened on the horizontal plane.

3. The airflow inverter device, according to one of the preceding claims, **characterised in that** the area of the transversal cross section of the ducts (7) is kept constant throughout the entire length of said ducts (7).

4. The airflow inverter device, according to one of the preceding claims, **characterised in that** the prismatic body (1) consists of a single piece, in which the ducts are configured (7).

5. The airflow inverter device, according to claim 4, **characterised in that** said piece is made of a thermally insulated material.

6. The airflow inverter device, according to one of the preceding claims, **characterised in that** the prismatic body (1) is obtained by moulding.

7. The airflow inverter device, according to one of the preceding claims, **characterised in that** at one of the ends of the prismatic body (1) sealing covers (13) are incorporated, which have openings (14) that coincide in front of the mouths (8) and (9) of the ducts (7) in the mounting position.

8. The airflow inverter device, according to claim 7, **characterised in that** each one of the covers (13) consists of a single piece, in which the openings (14) are defined.

9. The airflow inverter device, according to claim 7, **characterised in that** each one of the covers (13) is made up of two halves (13.1) and (13.2), in each one of which an opening (14) is defined.
